# EUROPEAN PATENT SPECIFICATION

(11) **EP 3 116 959 B1**
(45) Date of publication and mention of the grant of the patent: **26.09.2018**
(21) Application number: 15709672.8
(22) Date of filing: 12.03.2015
(51) Int. Cl.: C09D 5/00

(54) **COATING COMPOSITION**
BESCHICHTUNGSZUSAMMENSETZUNG
COMPOSITION DE REVÊTEMENT

(30) Priority: 14.03.2014 IN 752DE2014; 13.05.2014 EP 14168105
(43) Date of publication of application: 18.01.2017
(73) Proprietor: Akzo Nobel Coatings International B.V., 6824 BM Arnhem (NL)
(72) Inventor: WOULDHAVE, Matthew, Wallsend Tyne and Wear NE28 9HW (GB); KANATT, Bijoy, Bangalore 560016 (IN); HESSELINK, Sebastiaan J.A., Durham DH1 4FG (GB); DONKIN, Michael David, South Shields Tyne and Wear NE34 7PT (GB)
(74) Representative: Akzo Nobel IP Department
(86) International application number: PCT/EP2015/055121
(87) International publication number: WO 2015/136018

(56) References cited:
- WO-A1-2009/141058
- WO-A1-2010/089034
- WO-A2-2010/120617
- WO-A2-2011/028271
- US-A- 5 126 170
- US-A1- 2009 220 795

## Description

### Field of the Invention

The invention relates to coating compositions which have a low VOC (less than 250 g/l), are fast drying, and have excellent erosion resistance. These coating compositions are particularly suitable for use in coating wind blades. The present invention also relates to a method of protecting a substrate against rain erosion or solid particle erosion using the coating composition described herein, a coated wind blade or a part thereof, and the use of one or more specific ester(s) in a polyurea-based coating composition for improving the rain erosion resistance or solid-particle erosion resistance of a coating.

### Background of the Invention

Wind power is the conversion of wind energy into a useful form, such as electricity, using wind turbines. Wind power is produced in large scale wind farms connected to electrical grids, as well as in individual turbines for providing electricity to isolated locations. Wind turbines typically have 2 to 4 large blades which are designed to last around 20 to 25 years.

Wind turbine blades, or "wind blades" are constantly exposed to the elements and are ideally designed to endure temperature extremes, wind shears, precipitation, and/or other environmental hazards with minimal failure. Coating failure due to erosion is often observed on the leading edge of the blade. The "leading edge" of the blade will be understood as referring to the portion of the blade that first cuts into the wind, while the trailing edge is the opposite edge. The leading edge is typically subjected to environmental factors such as salt, sand, dirt and other particulates causing dry abrasion, as well as wet environmental factors such as wind, rain, snow and the like. Accordingly, accelerated coating failure and/or erosion may be observed on the leading edge.

Protective coatings for use on wind blades must therefore meet very stringent criteria in order for them to last their life time of around 20-25 years. A water droplet changes its shape considerably during collision. Most of the time the rain drop produces a ripple like shock waves on the surface of the paint film with a small damage at it's epicentre. For a coating on a wind blade to survive the multiple collisions of rain droplets for long time, the coating film should have good adhesion to the substrate and good resilience properties.

Current leading market products for coating wind blades are polyester based polyurethanes. Whilst these coating products have reasonable adhesion and resistance properties, they all have a high Volatile Organic Content (VOC) of greater than 250 g/l, and often dry slowly at ambient temperature. To increase the rate which thee coatings dry, they may be heated in an air oven. Further, multiple coatings of the polyurethane coatings are often required on the wind blade to achieve the required rain erosion protection. The application of multiple coatings to a wind blade takes time and is costly. In contrast, the coating composition of the present invention are capable of being applied to substrates easily in one coat, with minimal substrate surface preparation, and this coat is provides good rain erosion protection.

Coating compositions comprising polyurea type resins, for example compositions formed from polyaspartic ester amines and isocyanate curing agents are known in the protective coatings industry. However, the erosion resistance of such coatings are not known to be as good as the commercially leading polyester based polyurethane systems. Surprisingly, the inventors have found that when specific esters (one or more aromatic ester(s) and/or one or more aliphatic ester(s)), and optionally solid particles of amino resin based polymer are added to a specific polyurea coating system, the erosion resistance of the coating is dramatically improved to the extent that the coatings of the present invention provide resistance to erosion which is at least as good as the leading polyester based polyurethane coating systems. However, not only do the polyurea coatings of the present invention provide good resistance to erosion, but advantageously they also have a lower VOC than the leading polyester based polyurethane coating systems. Further, the coating composition of the present invention is capable of providing the same protection in less coating layers (e.g. just one coating layer), and is capable of being applied using standard techniques. The coatings of the present invention are capable of providing protection in the particularly harsh rain erosion conditions experienced by wind turbine blades.

The present invention provides a coating composition having a low VOC (preferably less than 250g/l), short dry time in ambient conditions (preferably less than 3 hours at 50% RH and 25°C), a good pot life (e.g. 90 min @ 25°C or longer), and can be applied easily using standard techniques. Further, the coating provides superior erosion protection, in particular rain erosion protection, compared to known polyurea based coating systems, which is achievable in just one coating layer.

### Summary of the Invention

The present invention is defined in claims 1-15 as attached. The present application relates to a coating composition comprising:
(i) a film forming resin comprising
   a) 60-90 weight% of one or more polyamine(s) containing secondary amine groups prepared by reacting one or more polyamine(s) comprising primary amine groups with an unsaturated dialkyl ester; and,
   b) 10-40 weight% of one or more ester(s) having the structure of Formula (2): 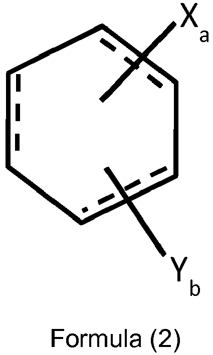 wherein X is a ester functional group having the structure of Formula (3a) or (3b) 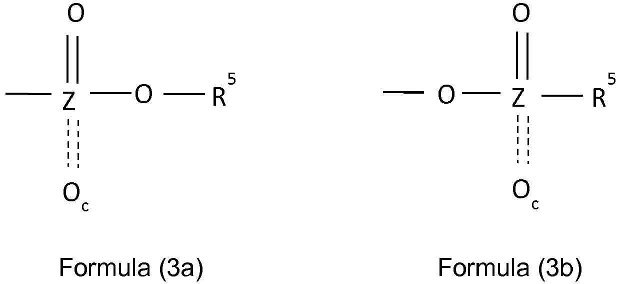
      Y is a monovalent alkyl group having 1 to 10 carbon atoms, for example 1 to 6 carbon atoms,
      a is 1 or 2; b is 0, 1 or 2;
      Z is C or S, and when Z is C c is 0, and when Z is S c is 1;
      R⁵ is a monovalent alkyl or arylalkyl group having 2 to 25 carbon atoms, for example 5 to 20 carbon atoms, and
      the dotted line represents an optional double bond,
      wherein weight % is based on the sum of the weight of (a) and (b) in the film forming resin excluding solvent, and
(ii) a polyisocyanate resin used to cure the film forming resin (i), wherein the polyisocyanate resin has an isocyanate equivalent weight of between 280 g/eq to 840 g/eq and a number average molecular weight of 550-2000g/mol,
wherein component (i) and component (ii) are present in the coating composition in an amount so that the stoichiometric ratio of isocyanate groups:secondary amine groups is 1.0:1.0 to 2.5:1.0.

Weight % of component (a) and (b) in the film forming resin is based the total weight of (a) and (b) in the film forming resin, excluding solvent.

The polyamine(s) containing secondary amine groups may be one or more cyclic polyamine(s) containing secondary amine groups prepared by reacting one or more cyclic polyamine(s) comprising primary amine groups with an unsaturated dialkyl ester.

The polyamine(s) containing secondary amine groups may be one or more polyaspartic ester amine(s).

The coating composition may further comprise solid particles of an amino resin based polymer. These solid particles of an amino resin based polymer have surprisingly been found to further enhance the erosion resistance of the coating, and in particular the rain-erosion resistance. The amino resin based polymer may be a methyl urea based polymer. The amino resin based polymer may be a crosslinked polymer. The solid particles of an amino resin based polymer are generally present in an amount of 1 to 25% by weight, based on the weight of the total coating composition.

The polyisocyanate resin may have an isocyanate equivalent weight of between 280 g/eq to 500 g/eq.

The film forming resin comprising secondary amine groups may have an amine equivalent weight of between 150 g/eq and 450 g/eq.

Preferably, component (i) and component (ii) are present in the coating composition in an amount so that the stoichiometric ratio of isocyanate groups:secondary amine groups is greater than 1.2:1.0, greater than 1.3:1.0, and preferably greater than 1.5:1.0 to a maximum ratio of 2.5:1.0.

The present invention may make use of known polyaspartic ester amines. In one embodiment the polyaspartic ester amine has the structure of Formula (1): 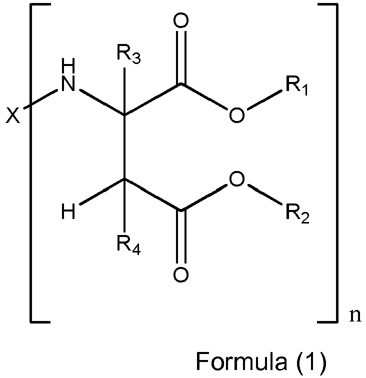
wherein X represents an linear or cyclic aliphatic hydrocarbon having a valency of at least 2 which is inert towards isocyanate groups at temperatures of up to 100°C;
R₁ and R₂ are each independently selected from organic groups which are inert toward isocyanate groups at temperatures of up to 100°C;
R₃ and R₄ each are independently selected from hydrogen and organic groups which are inert towards isocyanate groups at temperatures of up to 100°C; and n is an integer of at least 2.

The ester(s) [according to Formula (2)] may comprise one or more of the following:
(i) an (iso)phthalate ester formed from reacting phthalate acid and/or iso-phthalate acid with one or more aliphatic or aromatic alcohol(s) containing between 2 and 10 carbon atoms;
(ii) a phenol ester having optional alky functionality prepared by reacting phenol having optional alkyl functionality with a carboxylic acid or a sulphonic acid;
(iii) an aliphatic equivalent of component (i) and/or component (ii).

The polyisocyanate may comprise one or more pre-polymers of di-isocyanates or tri-isocyanates.

The coating composition may be provided in two packs, a first pack comprising the film forming resin and a second pack comprising the polyisocyanate resin.

The present invention also relates a method of protecting a substrate against erosion (e.g. rain erosion or solid particle erosion) by
- providing a coating composition as described herein,
- applying the coating composition to the substrate to form one or more coating layer(s) on the substrate, and
- allowing the coating layer(s) to harden/cure on the substrate at ambient temperature.

The coating composition of the present invention may be applied at a thickness of from about 100 µm to about 300µm, for example, in just one coat.

The substrate may be a wind blade or a part thereof. Erosion may be solid particle erosion or rain erosion. A coating composition that is capable of hardening/curing at ambient temperature is a coating composition that requires no artificial heating or UV source to effect curing/hardening. The coating composition of the present invention is therefore capable of curing to form a coating film on a substrate once it has been applied with no additional heating or exposure to an artificial UV radiation (i.e. UV lamp). Ambient temperature is also typically known in the art to be temperatures ranging from 0°C to 30°C.

The present invention also relates to coated substrate, for example a wind blade or a part thereof, wherein the substrate is coated with one or more layers of the coating composition described herein.

The present invention also relates to the use of one or more ester(s) according to Formula 2 in a polyurea-based coating composition to improve the rain erosion resistance or solid-particle erosion resistance of a coating formed from the polyurea-based coating composition. Optionally, the coating composition may further comprise solid particles of an amino resin based polymer to further improve the rain erosion resistance or solid-particle erosion resistance of a coating formed from the polyurea-based coating composition.

An improvement in rain erosion resistance is measurable in accordance with in accordance with ASTM G73-10. An improvement in erosion resistance to solid particles is measurable in accordance with ASTM G76 for Particle Erosion Test.

### Detailed Description of the Invention

### The Film Forming Resin

The film forming resin comprises one or more polyamine(s) containing secondary amine groups. Suitable examples of polyamines containing secondary amine groups include for example aliphatic polyester amines, aliphatic polyether amines, and polyaspartic ester amines.

Preferably the number average molecular weight of the polyamines comprising secondary amine groups ranges between 500 to 1200 g/mol, for example 550 to 900 g/mol. The molecular weight can be measured by GPC in accordance with ISO 13885-1: 2008.

The polyamines comprising secondary amine groups may have an amine equivalent weight of between 150 g/eq and 450 g/eq, for example 200-390 g/eq.

The Amine equivalent weight is calculated from Amine value as per the following formula: Amine equivalent = 56.1x1000 / [Amine value], wherein the Amine value can be determined in accordance with ASTM D 2074.

Suitable polyamine(s) containing secondary amine groups are polyaspartic ester amines as described in US Patent 5,126,170 (hereby incorporated by reference), and have a structure corresponding to the Formula (1) 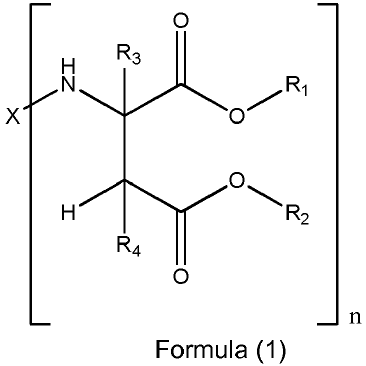
wherein X represents a cyclic or linear aliphatic hydrocarbon having a valency of at least 2 which is inert towards isocyanate groups at temperatures of up to 100°C;
R¹ and R² are each independently selected from organic groups which are inert toward isocyanate groups at temperatures of up to 100°C;
R³ and R⁴ each are independently selected from hydrogen and organic groups which are inert towards isocyanate groups at temperatures of up to 100°C; and n is an integer of at least 2.

For example, X may be a divalent hydrocarbon group comprising 6 to 20 carbon atoms. Preferably X represents a divalent hydrocarbon group obtained by the removal of the amine groups from 1,4-diaminobutane, 1,6-diaminohexane, 2,2,4- and 2,4,4-trimethyl-1,6-diaminohexane, 1-amino-3,3,5-trimethyl-5-aminomethyl-cyclohexane, 4,4'-diamino-dicyclohexyl methane, 3,3-dimentyl-4,4'-diamino-dicyclohexyl methane and 2-methylpentamethylenediamine, and polyether polyamines.

Preferably n is 2.

Preferably R¹ and R² represent C₁-C₆ alkyl groups for example methyl or ethyl groups. Preferably R³ and R⁴ represent hydrogen.
Polyaspartic ester amines may be prepared by reacting one or more polyamine(s) comprising primary amine groups with an unsaturated dialkyl ester, as described in described in US Patent 5,126,170.

The polyamine component comprising more than one primary amine group, which is used to make the polyaspartic ester, typically comprises 6-25 carbons, and optionally contains at least one alicyclic ring. Examples of suitable diamine components include 1,3-diaminocyclohexane, 1,4-diaminocyclohexane, 1,6-diaminocyclohexane, 2,2,4- and 2,4,4-trimethyl-1,6-diaminohexane, 1-amino-3,3,5-trimethy-5- aminomethylhexane and preferably bis(aminomethyl)cyclohexanes including 1,3-bis(aminomethyl)cyclohexane, 1,4-bis(aminomethyl)cyclohexane, isophoronediamine, bis(4-aminocyclohexyl)methane, bis(4-aminocyclohexyl)propane, 4,4-diamino-3,3-dimethyldicyclohexylmethane, 4,4-diamino-3,3-dimethyldicyclohexylpropane, 4,4-diamino-3,3-dimethyl-5,5-dimethyl dicyclohexylmethane, 4,4-diamino-3,3-dimethyl-5,5-dimethyldicyclohexylpropane, methylpentamethylenediamine (Dytek A) and polyether polyamines.

The unsaturated dialkyl ester, which is used to make the polyaspartic ester, is preferably butendioic acid diethyl ester, for example an ester of maleic acid or fumaric acid, for example dimethyl, diethyl, dipropyl and di-n-butyl esters of maleic and fumaric acid.

Alternatively, the polyaspartic ester may correspond to the general Formula (I) except wherein X is an aliphatic divalent hydrocarbon group comprising 5-10 carbon atoms and R₁, R₂, R₃, R₄ and n are the same as defined above.

For example, X may represent a divalent hydrocarbon group obtained by the removal of the amine groups from 2-methylpentane diamine or hexaminediamine. The polyaspartic ester may be prepared by reacting one or more aliphatic polyamine(s) comprising primary amine groups with an unsaturated dialkyl ester (as described above).
The film forming resin also comprises one or more esters having the structure according to Formula (2). i.e. the esters are one or a more aromatic esters and/or one or more aliphatic ester(s). The ester(s) may comprise one or more ester functional groups per molecule.

The ester(s) have the structure of Formula (2): 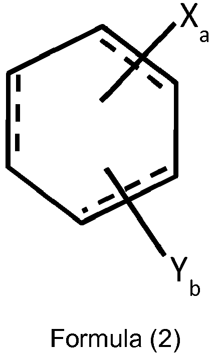 wherein X is a ester functional group having the structure of Formula (3a) or (3b) 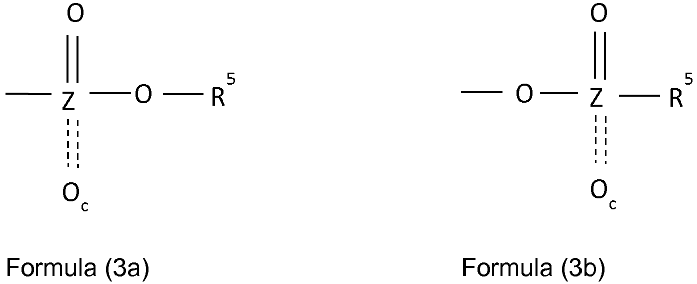
Y is a monovalent alkyl group having 1 to 10 carbon atoms, for example 1 to 6 carbon atoms,
a is 1 or 2; b is 0, 1 or 2;
Z is C or S, and when Z is C c is 0, and when Z is S c is 1;
R⁵ is a monovalent alkyl or arylalkyl group having 2 to 25 carbon atom, for example 5 to 20 carbon atoms; and wherein the dotted line represents an optional double bond.

It is clear from Formula (2) that the ester(s) do not contain nitrogen atoms. The ester(s) are therefore free of amine functional groups.
It is also clear from Formula (2) that the ester(s) may be one or more aromatic ester(s) and/or one or more aliphatic ester(s) having the structure of Formula (2). In one example, the esters consist of one or more aromatic ester(s) having the structure of Formula (2). In another example, the esters consist of one or more aliphatic ester(s) having the structure of Formula (2). In another example, the esters consist of a blend of one or more aromatic ester(s) and one or more aliphatic ester(s) having the structure of Formula (2).

The aromatic esters may be (iso)phthalate esters formed from phthalate acid or iso-phthalate acids with one or more alcohol(s), for example one or more C₂-C₂₅ aliphatic or aromatic alcohol(s), or for example C₂-C₁₀ aliphatic or aromatic alcohol(s). The one or more alcohols may have a branched or linear structure. In this case, the ester is an aromatic ester, the ester functional group has the structure of Formula (3a), a is 2, b is 0, c is 0, Z is C and R⁵ is a monovalent alkyl group having 2 to 25 carbon atoms.

The composition may additionally or alternatively comprise aromatic esters formed from reacting aromatic alcohols with a carboxylic acid or a sulphonic acid. Preferably the carboxylic acids/sulphonic acid is a C₂-C₂₅ carboxylic acid/sulphonic acid. The aromatic alcohols used to prepare the aromatic ester(s) include, for example, phenol and alkyl-substituted phenols, for example C₁-C₆ alkyl-phenols. In this case, the ester would be an aromatic ester, the ester functional group has the structure of Formula (3b), a is 1 or 2, b is 0, 1 or 2, c is 0 or 1, Z is C or S and R⁵ is a monovalent alkyl group having 2 to 25 carbon atoms.

The composition may additionally or alternatively comprise one or more aliphatic ester(s). The aliphatic ester(s) may be "equivalent" to the aromatic esters described in the preceding paragraphs in the sense that they have the same structure as any of the aromatic esters previously described, except that the aromatic part of the structure is replaced with the corresponding aliphatic structure. For example a benzene-ring structure in an aromatic ester would instead be a cyclohexane structure in the equivalent aliphatic ester.

The aliphatic ester "equivalent" of a phthalate ester may be prepared by reacting 1,2-cyclohexane dicarboxylic acid or the corresponding anhydride thereof, with one or more aliphatic alcohol(s). The aliphatic ester "equivalent" of an iso-phthalate ester may be prepared by reacting 1,3-cyclohexane dicarboxylic acid with one or more aliphatic alcohol(s). Optionally, the aliphatic alcohol(s) are C₂-C₂₅ aliphatic alcohol(s), which may be branched or linear. More specifically, the aliphatic alcohols are C₂-C₁₀ aliphatic alcohol(s), which may be branched or linear.

The aliphatic ester "equivalent" of an aromatic ester prepared from an aromatic alcohol, may be prepared by reacting a non-aromatic equivalent of the aromatic alcohol, for example cyclohexanol or alkylcylcohexanol (e.g. C₁-C₆-alkyl cyclohexanol), with a carboxylic acid/sulphonic acid. Optionally, the carboxylic acid/sulphonic acid is a C₅-C₂₅ carboxylic acid/sulphonic acid. The carboxylic acid/sulphonic acid may be linear or branched.

In one embodiment, the film forming resin comprises one or more aromatic esters and one or more aliphatic ester(s).

The film forming resin may optionally further comprise one or more aliphatic diamine component(s) provided the % weight of the one or more polyamine(s), the one or more aromatic ester(s) and/or one or more aliphatic ester(s) are present within the proportions as stated above, and the total % weight equals 100%.The aliphatic diamine component(s) may be linear, cyclic or branched. The aliphatic diamines may comprise 4-25 carbon atoms, most preferably 6-18 carbon atoms.

A commercially available film forming resin which may be used in the preparation of the coating compositions of the present invention comprising both (a) and (b) of the film forming resin in the claimed amounts is Amicure® IC-3004 (ex AirProducts and Chemicals, Inc).

### The Polyisocyanate Resin

The coating composition comprises a polyisocyanate resin used to cure the film forming resin (i).

The polysiocyanate resin may be one or more polyisocyanate resins.

The polyisocyanate resin(s) have an isocyanate equivalent weight of between 280 g/eq to 840 g/eq.

By isocyanate equivalent weight ("NCO eq. wt") we mean the number of grams of product to one equivalent of isocyanate ("NCO") reactive groups.

Isocyanate equivalent weight (g/eq) = 4,200 /[weight % of NCO in the polyisocyanate]. For example, for a known polyisocyanate resin having a weight % of NCO of 10, the calculated isocyanate equivalent weight is 4,200/10 = 420 g/eq. The isocyanate group content of the polyisocyanate resin is measurable by titration using di-n-butylamine in accordance with ASTM D2572-87.

In all embodiments, the isocyanate equivalent weight may be greater than 300 g/eq, or greater than 320 g/eq, or greater than 340 g/eq.

In all embodiments, the polysiocyanate resin may have an isocyanate equivalent weight of less than 840 g/eq, 800g/eq, 750g/eq, 700g/eq, 650g/eq, 600 g/eq, 550 g/eg or 500g/eq.

For example, the polyisocyanate resin has an isocyanate equivalent weight of 280-840 g/eq, 300-840 g/eq, 300-800 g/eq, 300-700 g/eq, 300-600 g/eq, 300-500 g/eq, 350-840 g/eq, or 350-450 g/eq.
Further, the number average molecular weight of the polyisocyanate resin ranges between 550 to 2000 g/mol, for example 1000 to 2000 or 1200 to 1800. The molecular weight can be measured by GPC in accordance with ISO - 13885-1: 2008

The one or more polyisocyanate resin may be selected from one or more aromatic or aliphatic polyisocyanates. Such polyisocyanates include as diisocyanates and triisocyanates including biurets and isocyanurates. It is preferred that the polysiocyanate resin comprises at least one aliphatic polyisocyanate resin. An aliphatic polyisocyanate resin is a polyisocyanate that comprises an aliphatic segment therein. Preferably the aliphatic polyisocyanate is based on hexamethylene diisocyanate.

Diisocyanates include toluene diisocyanate, 4,4'-methylene-bis(cyclohexyl isocyanate), isophorone diisocyanate, an isomeric mixture of 2,2,4- and 2,4,4-trimethyl hexamethylene diisocyanate, 1,6-hexamethylene diisocyanate, tetramethyl xylylene diisocyanate and/or 4,4'-diphenylmethylene diisocyanate.

Biurets of diisocyanates include 1,4- tetramethylene diisocyanate and 1,6-hexamethylene diisocyanate, as well as of cycloaliphatic diisocyanates such as isophorone diisocyanate and 4,4'- methylene-bis-(cyclohexyl isocyanate). Examples of aralkyl diisocyanates from which biurets may be prepared are meta-xylylene diisocyanate and alpha.,.alpha.,.alpha.',.alpha.'-tetramethylmeta-xylylene diisocyanate.

Trifunctional isocyanates include trimers of isophorone diisocyanate, triisocyanato nonane, triphenylmethane triisocyanate, 1,3,5-benzene triisocyanate, 2,4,6-toluene triisocyanate, and isocyanurates of hexamethylene diisocyanate,. Specifically used polyisocyanates are alicyclic isocyanates, particularly, isocyanurates of diisocyanates such as hexamethylene diisocyanate and isophorone diisocyanate.

The polyisocyanate resin may be one or more polyisocyanate pre-polymers. Polyisocyanate pre-polymers are known in the art. They are discrete molecules produced by reaction of a polyol with an excess of diisocyanate monomers. An example of suitable polyisocyanate pre-polymers for use in the present invention are polyisocyanate pre-polymers of hexamethylene diisocyanate. Such suitable polyisocyanate prepolymers can be obtained commercially, for example, Desmodur ® N3800 and Desmodur ® E3370 from Bayer Corporation. Desmodur ® N3800 is an aliphatic polyisocyanate (HDI isocyanurate trimer) with a NCO content of 11±0.5% (isocyanate equivalent weight=4,200/11 = 382g/eq). Desmodur ® E3370 is an aliphatic polyisocyanate prepolymer also based on hexamethylene diisocyanate with a NCO content of 10.0±0.5% (isocyanate equivalent weight=4,200/11 = 400g/eq). These polyisocyanate prepolymers can be used alone or in combination with one another.

### The stoichiometic ratio of isocyanate groups to secondary amine groups in the coating composition

A "1:1 stoichiometic ratio" of isocyanate groups to secondary amine groups, is to be understood in it's normal way: an equal number of isocyanate groups to secondary amine groups.

The film forming resin and the polyisocyanate resin should be present in the coating composition in an amount so that the stoichiometric ratio of isocyanate groups (NCO):secondary amine groups (NR₂H) is 1.0:1.0 to 2.5:1.0. (i.e. 1.0 to 2.5 isocyanate groups to every 1.0 secondary amine group).
Component (i) and component (ii) may be present in the coating composition in an amount so that the stoichiometric ratio of isocyanate groups:secondary amine groups is greater than 1.3:1.0, greater than 1.4:1.0, greater than 1.5:1.0 and suitably greater than 1.6:1.0, up to a maximum stoichiometric ratio of 2.5:1.0.

The stoichiometric ratio of isocyanate groups:secondary amine groups may be a maximum of 2.4:1.0, 2.3:1.0, 2.2:1.0, 2.1:1.0 or 1.9:1.0.

### Solid particles of an amino resin based polymer

The coating composition may optionally comprise solid particles of an amino resin based polymer. The solid particles of an amino resin based polymer may be present in the coating composition in an amount of at least 1, or at least 2, or even at least 4% by weight, calculated on the total weight of the coating composition. The upper limit of the amount of the particles suitably is 25%, or 20%, or 14% by weight, calculated on the total weight of the composition. The average particle size generally is in the range of 1 µm to 150 µm. The particles used generally have a particle size distribution. For example, 90% of all particles may be smaller than 14 µm, and 50% of all particles may be smaller 6.5 µm. Particle size is measurable by a Laser Diffraction, for example by using a Horiba laser diffraction particle size analyzer.

The lateral dimension and the longitudinal dimension of the particles may be of a similar order. The particles may for example be essentially of spherical shape. However, the particles may also have other shapes, for example a platelet shape or a needle shape.

The amino resin based polymer can suitably be prepared by condensation reactions of amino resins or amino resin precursors with formaldehyde or by other condensation and/or addition reactions of amines. Examples of suitable amino resin based polymers are guanidine based polymers, melamine based polymers, urethane based polymers, amide based polymers, and urea based polymers, in particular methyl urea based polymers. The amino resin based polymer suitably is crosslinked, i.e. the polymer is a duroplast. Crosslinking can occur in the condensation reaction of the amino resin with formaldehyde. However, crosslinking can also be caused by additional crosslinking agents. Suitable solid particles of amino resin based polymer are commercially available, for example under the trade designation Deuteron® MK ex Deuteron GmbH, Germany. The Deuteron® MK particles are based on methyl urea polymer.

### Solvents

The coatings compositions typically comprise solvent. Examples of solvents that may be used include for example xylene, aliphatic white spirit solvent, mineral spirits, ketonic solvents such as the following C₃-C₈ ketonic solvents: methyl isopentyl ketone, methyl n-butyl ketone, methyl isobutyl ketone, methyl ethyl ketone, diethyl ketone and acetone, and ester solvents such as the following acetate esters: ethyl acetate, propyl acetate, butyl acetate and 1-methoxy-2-propyl acetate. One or more solvents may be used in the coating composition.

### Other components in the coating composition

The coating composition may also include a variety of other fillers and additives, for example, pigments, extender pigments, colouring agents, pigment dispersants, corrosion inhibitors, reinforcing agents, rheology-controlling agents, levelling agents, fatting agents, wetting agents, anti-cratering agents, antifoaming agents, biocides, accelerators, surfactants, (organic) solvents, plasticizers, light stabilizers, UV light absorbers (e.g. Tinuvin ® 292), moisture scavengers, antioxidants and odour masking agents.

A filler is a solid, solvent insoluble material, often employed to add bulk volume or to extend the pigments capabilities without impairing the reactive chemistry of the coating mixture (e.g. pigments and extender pigments). Fillers are may be employed at a concentration of 2 to 30 wt % of the total weight of the coating composition.

Fillers may also be included to inhibit corrosion or provide strength. Examples of fillers include finely divided minerals such as barium sulfate, silica, including fumed silica and/or colloidal silica, alumina, kaolin, colloidal alumina, titanium dioxide, zirconia, colloidal zirconia, clay, mica, dolomite, talc, magnesium carbonate, calcium carbonate, calcium sulfate, calcium silicate, and/or calcium metasilicate. Other fillers include ceramic microspheres & hollow polymeric microspheres such as those available from Akzo Nobel under the trade name Expancel ®, and hollow glass microspheres (such as those commercially available from 3M Company, St. Paul, Minn, under the trade designation "K37"™).

The coating composition may include a colorant. As used herein, the term "colorant" means any substance that imparts color and/or other opacity and/or other visual effect to the composition. The colorant can beaded to the coating in any suitable form, such as discrete particles, dispersions, solutions and/or flakes. A single colorant or a mixture of two or more colorants can be used in the coatings of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, such as an acrylic grind vehicle, the use of which will be familiar to one skilled in the art. Colourant may be incorporated by using strainers/ colour concentrates.

### Typical coating composition

A typical coating composition of the present invention comprises:
- 5-30 weight % of the film forming resin; and
- 20-50 weight% of the polyisocyanate resin.

If solid particles of an amino resin based polymer are present, they are generally present in the coating composition up to 20 weight%, for example 5-20 wt %.

The coating composition may also comprise 5-20 weight % of aluminosilicates.

An aluminosilicate is a mineral composed of aluminium, silicon and oxygen, plus counterions. They are a major component of kaolin and other clay minerals. Andalusite, kyanite, and sillimanite are naturally occurring aluminosilicate minerals that have the composition Al₂SiO₅. Hydrated aluminosilicate minerals are referred to as zeolites and are porous structures that are naturally occurring materials.

Typical coating compositions of the present invention comprise:
- 5-30 weight % of the film forming resin
- 20-50 weight% of the polyisocyanate resin,
- 5-20 weight% of the solid particles of an amino resin based polymer
- 15-30 weight% of one or more pigments and/or extender pigments,
- 10-30 weight% of one or more organic solvents.

Typical coating compositions may also comprise 1-10 weight% of one or more other additives that are not listed above, for example, additives for aiding wetting, dispersion, leveling, flow, absorbance of UV (e.g. Tinuvin ® 292), reducing deformation and thixotropic agents (e.g. a bentonite thixotropic agent).

Unless otherwise stated, Weight % of each of the components in the coating compositions is based the total weight of the components in the coating composition including solvent.

### Method of making the Coating Composition

It is believed that there is some interaction between the (a) one or more cyclic polyamines and the (b) one or more ester(s) of the film forming resin, although how these components interact is not precisely understood.
The coating composition is therefore prepared by combining the film forming resin component (i) which comprises both components (a) and (b) as defined herein, with the polyisocyanate resin component (ii).

The coating composition may be prepared by any suitable technique that is commonly used within the field of paint production. Thus, the various constituents may be mixed together using a high speed disperser, a ball mill, a pearl mill, a three-roll mill, bead mill, basket mill etc. The paints according to the invention may be filtered using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration. The coating compositions of the present invention are typically provided as a two-pack composition, with the film forming resin in one pack and polyisocyanate resin in the other pack. If the coating composition also comprises solid particles of an amino resin based polymer, these are typically in the package with the film forming resin. Prior to application of the coating composition to a substrate, the two packs are mixed together.

### Application of the Coating Composition

The coating composition may be applied to the substrate by a number of methods including spraying, rolling, curtain coating, dipping/immersion, brushing, or flow coating, but they are most often applied by spraying and rolling. The usual spray techniques and equipment for air spraying and electrostatic spraying and may be manual or automatic methods. For example robotic spray methods can be used.

The coating composition is typically cured at ambient temperature. A coating composition that is capable of curing at ambient temperature is a coating composition that requires no artificial heating or UV to effect curing. The coating composition of the present invention is therefore capable of curing to form a coating film on a substrate once it has been applied with no additional heating or exposure to an artificial source of UV radiation. Ambient temperature is also typically known in the art to be temperatures ranging from 0°C to 30°C.

The coating composition may additionally be cured under low-bake conditions to speed up curing (for example above 30°C to about 35°C). An advantage of the coating composition of the present invention is that it has a pot-life that enables for it to be applied using conventional techniques (e.g. standard airless /air assisted equipment), and it also can cure quickly at ambient temperature. If ambient temperature curing is utilized, is it possible for the composition to cure in less than 3 hours at 50% relative humidity (50% RH) and 25°C. Often the composition cures in less than 2 hours at 50% relative humidity (50% RH) and 25°C.

Wind blades are typically made of composite materials. A "composite" will be generally understood as referring to engineering materials made from two or more different materials. Typically, the two or more materials have different, sometimes significantly different, physical and/or chemical properties. A composite typically has a matrix material and a reinforcement material; the matrix surrounds and supports the reinforcement. The composites of the present invention typically comprise a polymeric material as the matrix and a fiber as the reinforcement. The fiber can comprise, for example, glass fibers (i.e. fiberglass), carbon fibers, aramid fibers, Kevlar fibers, fibers made from natural materials, and fibersmade from nanoparticles. Suitable polymeric material can be thermoplastic or thermoset and includes, for example, polyester and epoxy. Typically, at least one of the fibers will be coated with or embedded in, at least in part, the polymeric material. A particular example includes fiber-reinforced composite materials, such as reinforced fiberglass composites (e.g. glass reinforced epoxy compositions), which are particularly suitable for wind blade construction. Fiber reinforced polymers, such as plastics, are also within the scope of "composites" as that term is used herein. A composite substrate according to the present invention may have one continuous surface, two or more surfaces such as two opposing surfaces, or any other configuration. In a particular embodiment, the substrate is a composite in the form of a wind blade. The coating system may be applied to at least a part of a composite, for example, to the leading edge of the wind blade.

Before depositing any coating compositions upon the surface of the composite, it is typically desired to remove foreign matter from the surface by thoroughly cleaning and, if necessary, degreasing the surface.
In order to optimize surface readiness (smoothness), filler may be applied to fill surface defects. Filler compositions known to be useful in the fields of aerospace and automotive substrate preparation or repair and coatings are suitable for use.
Filler is typically applied by hand with a blade and sanded to achieve an acceptably smooth surface. An air knife can also be used to remove the residue from sanding.

Another advantage of the coating composition of the present invention is that it is suitable for use as both a primer coating and as a top coat, particularly on a windblade substrate. This means that only one layer of the coating composition is required for coating. Advantageously, the coating composition can achieve the desired dry film thickness (from about 100 µm to about 300µm) and also the desired rain erosion protection in just one coat. A reduction in the number coating layers leads to less time required to carry out maintenance of the wind blade, and no problems with the compatibility of the wind blade coating of the present invention with any other coating layers.

The viscosity of the coating composition ready to be applied should be suitable for application using standard application techniques. For example, the viscosity of the coating composition is preferably between 0.1-10 poise at 25°C, as measured in accordance with ASTM D4287.

The coating composition of the present invention may also be used in a method for repairing a wind blade, the method comprising applying to at least a portion of a wind blade the coating composition of the present application. The coating can be applied to substantially all the wind blade, or just to a portion of the wind blade, such as the leading edge of the wind blade. In certain embodiments, one or more of the coating layers can be applied to at least a portion of the wind blade. The wind blade repaired in this manner can have a pre-existing coating or coating layers, some or all of which may be removed prior to application of the topcoat. Alternatively, the newly added topcoat could be painted over the existing coating and would be a "second" topcoat. In this embodiment, a tie coat or other adhesion-promoting layer may be applied to the existing coating.

### Other Applications

The coating compositions disclosed herein are particularly suitable for use on wind blades to protect against rain erosion, however they can also be used to protect wind blades and other substrates against solid particle erosion. Examples of other applications include use in the mining and building industry, especially to protect surfaces in contact with water/ slurries for use in the inside of pipes, and as an OEM (original equipment manufacturer) finish coating over earth moving equipment.

The present invention therefore relates to the use of the coating composition disclosed herein for coating substrates, especially when there is a need to protect against erosion, for example water/rain erosion and solid particle erosion.

Substrates therefore include materials such as composite material (as previously described), metal, concrete and plastics, or these materials already coated or partially coated with a paint or a filler. A paint may be, for example, a coating of the present invention or a different coating comprising polyurea, polyurethane or an epoxy based resin. Advantageously, the coating composition may be applied directly to the above-noted materials.

The invention also relates to these substrates coated with the coating composition of the present invention.

### Examples

The following examples are intended to illustrate various embodiments of the invention, and should not be construed as limiting the invention in any way.

### Example 1: Preparation of a coating composition of the present invention

A coating composition in accordance with the present invention was prepared by mixing together the components 1 to 9 in Table 1 using a high speed disperser and bead mill. Components 1 to 7 were mixed together first, followed by the addition of pre-mixed components 8 and 9. The stoichiometric ratio of isocyanate groups:secondary amine groups was 1.8:1.

**Table 1**

| **Component** | | **% by weight** |
|---|---|---|
| 1 | Amicure® IC-3004 | 17 |
| 2 | TiO₂ | 8.5 |
| 3 | Deuteron® MK, amino resin based polymer particles ex Deuteron | 10.5 |
| 4 | Sodium aluminosilicate powder | 10 |
| 5 | Additives: Ceraflour ® 996; BYK-077, BYK-066N,Tego® Airex 900; BYK-307; Tinuvin 292 | 3 |
| 6 | Methyl N-amyl ketone | 9 |
| 7 | 1-methoxy-2-propyl acetate | 10 |
| 8 | Methyl N-amyl ketone | 1 |
| 9 | Desmophen ® N3800 | 31 |

| | | |
|---|---|---|
| Amicure® IC-3004 ex AirProducts and Chemicals, Inc - Film forming resin in accordance with the invention; Deuteron® MK, amino resin based polymer particles ex Deuteron; Ceraflour ® 996 ex BYK-Chemie GmBH - micronized polyethylene wax/PTFE mixture; BYK-077 ex BYK-Chemie GmBH - methylalkylpolysiloxane; BYK-066N ex BYK-Chemie GmBH - isobutyl ketone polysiloxane; Tego® Airex 900 ex Evonik Industries AG - organo-modified polysiloxane; BYK-307 ex BYK-Chemie GmBH - polyester modified siloxane; Tinuvin 292 ex BASF Resins - liquid hindered amine light stabilizer; Desmophen® N3800-solvent free aliphatic polyisocyanate which is a monomeric HDI trimer having an NCO content of 11.0. | | |

### Comparative Example 2: Preparation of a comparative coating composition

All the components in the comparative coating composition were the same as in Example 1 except the film forming resin was Desmophen ® NH1420 (ex Bayer Material Science AG) instead of IC-3004. Desmophen ® NH1420 is a polyaspartic ester resin which does not contain 10-40 weight% of ester(s) according to Formula (2).

Like Example 1, the stoichometric ratio of isocyanate groups:secondary amine groups was 1.8:1. The comparative coating composition was prepared by mixing together the components using a high speed disperser and bead mill as described in Example 1.

### Testing of Coatings

The coating composition of Example 1 and comparative coating composition of Example 2 were each applied to an aerofoil shaped mould made from glass reinforced epoxy composite substrate at a dry film thickness of 200µm by spray application technique and allowed to cure at 27°C. The test coatings were then kept for 21 days maturation for complete film properties development. For each coating, the rain erosion resistance was determined in accordance with ASTM G73-10. This test involves attaching test specimens to a rotating arm, such that in their circular path it repeatedly passes through and impacts against a water spray. It's an accelerated test methodology where the resistance of the specimen to multiple water droplets impact at very high velocity is tested. Coatings which show good performance in this accelerated test are expected to have good durability in field.

### Parameters of Test:

| | |
|---|---|
| Duration of test | 3 hours |
| Length of blade | 22 cm |
| Velocity at root of blade | 126 m/sec |
| Velocity at centre of blade | 143 m/sec |
| Velocity at tip of blade | 160 m/sec |
| Rain | 30-33 mm/hour |
| Droplet size | 1-2 mm |
| Temperature | 20-25°C |

Evaluation of resistance to rain erosion was based on of the amount of visual damage to the coating due to the repeated multiple impact of the rain drops. The coatings were visually assessed every 30 minutes for 3 hours. For all coatings, the first damage was at the tip of the blade where the velocity was greatest. During the tests, damage to the coating was also found to occur progressively up towards the root of the blade. The coating having a greater resistance to rain erosion has a shorter length of damaged area, compared to a coating having a lower resistance to rain erosion.

The results of the rain erosion testing are shown in Table 2.

**Table 2 - Values in Table 2 correspond to length of damaged area on blade/cm**

| **Time (hr)** | **Example 1** (length of damaged area on blade/cm) | **Comparative Example 2** (length of damaged area on blade/cm) |
|---|---|---|
| 0.5 | 0 | 5 |
| 1.0 | 11 | 13 |
| 1.5 | 12 | 16 |
| 2.0 | 15 | 20 |
| 2.5 | 18 | 22* |
| 3.0 | 20 | 22* |

| | | |
|---|---|---|
| * *maximum* possible *length of damage* was *22cm.* | | |

The results show that the coating of Example 1 had superior resistance to rain erosion compared to the comparative coating of Example 2. Only after 2.5 hours the entire length of the blade coated with comparative Example 2 was damaged.

The pot life of coating composition 1 and comparative coating composition 2 was determined in accordance with ISO 9514 (Method A) at a temperature of 25°C. The pot life of coating composition 1 was determined to be 60 minutes, which was better than the pot life of the comparative coating composition which was determined to be 90 minutes.
The time for the coatings to hard-dry having a DFT of 200 microns was measured by BK dry track recorder (ASTM D 5895), with the modification that the temperature/humidity was 27°C, RH-78%. Both coatings had a hard-dry time of 130 minutes. This hard-dry time is shorter than the hard-dry time of a leading commercial polyester-based polyurethane product for coating wind blades, which was measured using the same test to be 180 minutes.

The Volatile Organic Content (VOC) of the coating composition 1 and comparative coating composition 2 was determined in accordance with EPA Federal Reference Method 24. The VOC of both coating compositions was 245 g/L. This is considerably less than a leading commercial polyester-based polyurethane product for coating wind blades, which was determined to be 420 g/L.

## Claims

1. A coating composition comprising
(i) a film forming resin comprising
a) 60-90 weight % of one or more polyamine(s) containing secondary amine groups prepared by reacting one or more polyamine(s) comprising primary amine groups with an unsaturated dialkyl ester; and,
b) 10-40 weight% of one or more ester(s) having the structure of Formula (2) 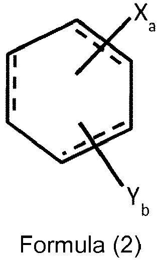 wherein X is a ester functional group having the structure of Formula (3a) or (3b) 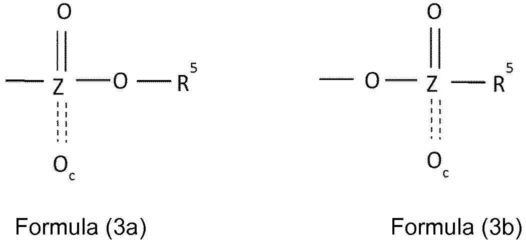
Y is a monovalent alkyl group having 1 to 10 carbon atoms, for example 1 to 6 carbon atoms,
a is 1 or 2; b is 0, 1 or 2;
Z is C or S, and when Z is C c is 0, and when Z is S c is 1 R⁵ is a monovalent alkyl or arylalkyl group having 2 to 25 carbon atom; the dotted line represents an optional double bond; and
formula (2) does not contain N-atoms,
wherein weight % is based on the sum of the weight of (a) and (b) in the film forming resin excluding solvent, and
(ii) a polyisocyanate resin used to cure the film forming resin (i), wherein the polyisocyanate resin has an isocyanate equivalent weight of between 280 g/eq to 840 g/eq and a number average molecular weight of 550-2000 g/mol, wherein the isocyanate equivalent weight is measured by means of measuring the isocyanate group content by tritation using di-n-butylamine according to ASTM D2572-87, and the number average molecular weight is measured by GPC according to ISO-13885-1:2008
wherein component (i) and component (ii) are present in the coating composition in an amount so that the stoichiometric ratio of isocyanate groups:secondary amine groups is 1.0:1.0 to 2.5:1.0.

2. A coating composition according to claim 1 wherein the polyamine(s) containing secondary amine groups are cyclic polyamine(s) containing secondary amine groups prepared by reacting one or more cyclic polyamine(s) comprising primary amine groups with an unsaturated dialkyl ester.

3. A coating composition according to any preceding claim wherein the polyamine(s) containing secondary amine groups is a polyaspartic ester amine.

4. The coating composition according to any one of the preceding claims further comprising solid particles of an amino resin based polymer, optionally wherein the amino resin based polymer is a methyl urea based polymer.

5. The coating composition according to claim 4, **characterized in that** the amino resin based polymer is a crosslinked polymer.

6. The coating composition according to claim 4 or claim 5, **characterized in that** the solid particles of an amino resin based polymer are present in an amount of 1 to 25% by weight, based on the weight of the total coating composition.

7. The coating composition according to any one of the preceding claims wherein the polyisocyanate resin has an isocyanate equivalent weight of between 280 g/eq to 500 g/eq.

8. The coating composition according to any one of the preceding claims wherein the one or more polyamine(s) comprising secondary amine groups has an amine equivalent weight of between 150 g/eq and 450 g/eq.

9. The coating composition of any preceding claim wherein component (i) and component (ii) are present in the coating composition in an amount so that the stoichiometric ratio of isocyanate groups:secondary amine groups is greater than 1.5:1.0 to a maximum ratio of 2.5:1.0.

10. The coating composition of any preceding claim wherein the one or more polyamine containing secondary amine groups of the film forming resin has the structure of Formula (1): 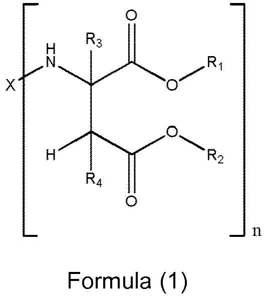
wherein X represents a linear or cyclic aliphatic hydrocarbon having a valency of at least 2 which is inert towards isocyanate groups at temperatures of up to 100°C;
R₁ and R₂ are each independently selected from organic groups which are inert toward isocyanate groups at temperatures of up to 100°C;
R₃ and R₄ each are independently selected from hydrogen and organic groups which are inert towards isocyanate groups at temperatures of up to 100°C; and
n is an integer of at least 2.

11. The coating composition of any preceding claim provided in two packs, a first pack comprising the film forming resin and a second pack comprising the polyisocyanate resin.

12. A method of protecting a substrate against rain erosion or solid particle erosion by
- providing a coating composition as defined in any one of claims 1 to 11,
- applying the coating composition to the substrate to form one or more coating layer(s) on the substrate, and
- allowing the coating layer(s) to harden on the substrate at ambient temperature,
wherein the protection against rain erosion resistance is measurable according to ASTM G73-10 and the protection against solid particle erosion resistance is measurable according to ASTM G76.

13. The method of Claim 12, wherein the substrate is a wind blade or a part thereof.

14. A coated substrate, for example a wind blade or a part thereof, wherein the wind blade or part thereof is coated with one or more layers of coating composition as defined in any one of Claims 1 to 11.

15. Use of one or more ester(s) having the structure of Formula (2) 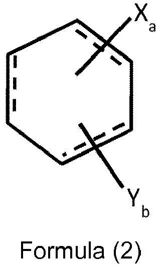 wherein X is a ester functional group having the structure of Formula (3a) or (3b) 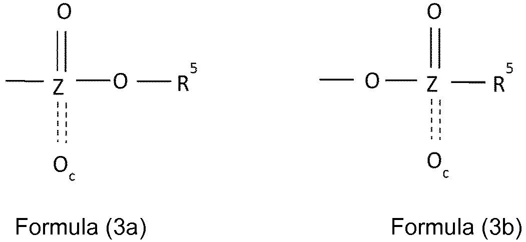
Y is a monovalent alkyl group having 1 to 10 carbon atoms, for example 1 to 6 carbon atoms,
a is 1 or 2; b is 0, 1 or 2;
Z is C or S, and when Z is C c is 0, and when Z is S c is 1
R⁵ is a monovalent alkyl or arylalkyl group having 2 to 25 carbon atom;
the dotted line represents an optional double bond, and
wherein formula (2) does not contain N-atoms,
in a polyurea-based coating composition to improve the rain erosion resistance or solid particle erosion resistance of a coating formed from the polyurea-based coating composition, wherein the improvement on rain erosion resistance is measurable according to ASTM G73-10 and the improvement on solid particle erosion resistance is measurable according to ASTM G76.

## Patentansprüche

1. Beschichtungszusammensetzung, umfassend
(i) ein filmbildendes Harz, umfassend
a) 60-90 Gew.% von einem oder mehreren Polyamin(en), enthaltend sekundäre Amingruppen, hergestellt durch Reagierenlassen von einem oder mehreren Polyamin(en), umfassend primäre Amingruppen, mit einem ungesättigten Dialkylester, und
b) 10-40 Gew.% von einem oder mehreren Ester(n) mit der Struktur von Formel (2) 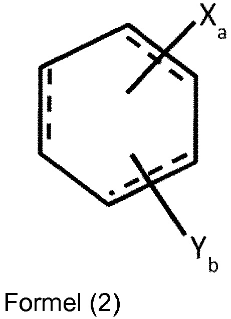
wobei X eine funktionelle Estergruppe mit der Struktur von Formel (3a) oder (3b) ist 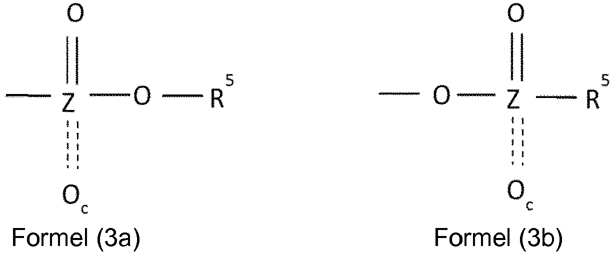
Y eine monovalente Alkylgruppe mit 1 bis 10 Kohlenstoffatomen, z.B. 1 bis 6 Kohlenstoffatomen, ist;
a gleich 1 oder 2 ist; b gleich 0, 1 oder 2 ist;
Z gleich C oder S ist und wenn Z gleich C ist, c gleich 0 ist, und wenn Z gleich S ist, c gleich 1 ist
R⁵ eine monovalente Alkyl- oder Arylalkylgruppe mit 2 bis 25 Kohlenstoffatomen ist;
die gestrichelte Linie eine optionale Doppelbindung repräsentiert; und
Formel (2) keine N-Atome enthält,
wobei die Gew.% auf der Summe des Gewichts von (a) und (b) in dem filmbildenden Harz, ausgenommen Lösungsmittel, basieren, und
(ii) ein Polyisocynatharz verwendet wird, um das filmbildende Harz (i) auszuhärten, wobei das Polyisocyanatharz ein Isoyanat-Äquivalentgewicht von zwischen 280 g/eq bis 840 g/eq und einen Zahlenmittelwert des Molekulargewichts von 550-2000 g/mol besitzt, wobei Isoyanat-Äquivalentgewicht gemessen wird durch Messen des Isocyanatgruppengehalts durch Titration unter Verwendung von Di-n-butylamin nach ASTM D2572-87 und der Zahlenmittelwert des Molekulargewichts durch GPC nach ISO-13885-1:2008 gemessen wird,
wobei die Komponente (i) und die Komponente (ii) in der Beschichtungszusammensetzung in einer Menge vorhanden sind, so dass das stöchiometrische Verhältnis der Isocyanat-Gruppen:sekundären Amingruppen 1,0:1,0 bis 2,5:1,0 beträgt.

2. Beschichtungszusammensetzung nach Anspruch 1, wobei das (die) Polyamin(e), enthaltend sekundäre Amingruppen, cyclische Polyamin(e), enthaltend sekundäre Amingruppen, sind, hergestellt durch Reagierenlassen von einem oder mehreren cyclischen Polyamin(e)n, umfassend primäre Amingruppen mit einem ungesättigten Dialkylester.

3. Beschichtungszusammensetzung nach einem der vorhergehenden Ansprüche, wobei das (die) Polyamin(e), enthaltend sekundäre Amingruppen, ein Polyasparagin-Esteramin ist.

4. Beschichtungszusammensetzung nach einem der vorhergehenden Ansprüche, weiterhin umfassend Feststoffpartikel eines auf einem Aminoharz basierenden Polymers, wahlweise wobei das auf einem Aminoharz basierende Polymer ein auf Methylharnstoff basierendes Polymer ist.

5. Beschichtungszusammensetzung nach Anspruch 4, **dadurch gekennzeichnet, dass** das auf einem Aminoharz basierende Polymer ein vernetztes Polymer ist.

6. Beschichtungszusammensetzung nach Anspruch 4 oder 5, **dadurch gekennzeichnet, dass** die Feststoffpartikel eines auf einem Aminoharz basierenden Polymers in einer Menge von 1 bis 25 Gew.%, basierend auf dem Gewicht der gesamten Beschichtungszusammensetzung, vorhanden sind.

7. Beschichtungszusammensetzung nach einem der vorhergehenden Ansprüche, wobei das Polyisocyanatharz ein Isoyanat-Äquivalentgewicht von zwischen 280 g/eq bis 500 g/eq hat.

8. Beschichtungszusammensetzung nach einem der vorhergehenden Ansprüche, wobei das eine oder die mehreren Polyamin(e), umfassend sekundäre Amingruppen, ein Amin-Äquivalentgewicht von zwischen 150 g/eq und 450 g/eq haben.

9. Beschichtungszusammensetzung nach einem der vorhergehenden Ansprüche, wobei die Komponente (i) und die Komponente (ii) in der Beschichtungszusammensetzung in einer Menge vorhanden sind, so dass das stöchiometrische Verhältnis von Isocyanat-Gruppen:sekundären Amingruppen größer ist als 1,5:1,0 bis zu einem maximalen Verhältnis von 2,5:1,0.

10. Beschichtungszusammensetzung nach einem der vorhergehenden Ansprüche, wobei das eine oder die mehreren Polyamin(e), enthaltend sekundäre Amingruppen des filmbildenden Harzes, die Struktur der Formel (1) haben: 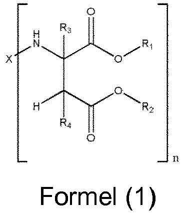
wobei X einen linearen oder cyklischen, aliphatischen Kohlenwasserstoff mit einer Wertigkeit von wenigstens 2 repräsentiert, der gegenüber Isocyanat-Gruppen bei Temperaturen von bis zu 100°C inert ist;
R₁ und R₂ jeweils unabhängig ausgewählt sind aus organischen Gruppen, die gegenüber Isocyanat-Gruppen bei Temperaturen von bis 100°C inert sind;
R₃ und R₄ jeweils unabhängig ausgewählt sind aus Wasserstoff und organischen Gruppen, die gegenüber Isocyanat-Gruppen bei Temperaturen von bis 100°C inert sind; und
n eine Zahl von wenigstens 2 ist.

11. Beschichtungszusammensetzung nach einem der vorhergehenden Ansprüche, die in zwei Packungen bereitgestellt ist, eine erste Packung, umfassend das filmbildende Harz, und eine zweite Packung, umfassend das Polyisocyanatharz.

12. Verfahren zum Schutz eines Substrats vor Regenerosion oder Feststoffpartikelerosion durch
- Bereitstellen einer Beschichtungszusammensetzung nach einem der Ansprüche 1 bis 11,
- Auftragen der Beschichtungszusammensetzung auf das Substrat, um eine oder mehrere Schicht(en) auf dem Substrat zu bilden, und
- Aushärtenlassen der Schicht(en) auf dem Substrat bei Umgebungstemperatur, wobei der Schutz vor Regenerosion nach ASTM G73-10 messbar ist und der Schutz vor Feststoffpartikelerosion nach ASTM G76 messbar ist.

13. Verfahren nach Anspruch 12, wobei das Substrat ein Rotorblatt oder ein Teil davon ist.

14. Beschichtetes Substrat, z.B. ein Rotorblatt oder ein Teil davon, wobei das Rotorblatt oder ein Teil davon mit einer oder mehreren Schichten der Beschichtungszusammensetzung nach einem der Ansprüche 1 bis 11 beschichtet ist.

15. Verwendung von einem oder mehreren Ester(n) mit der Struktur der Formel (2) 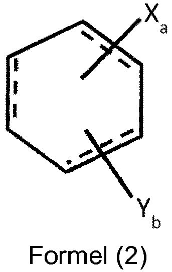 wobei X eine funktionelle Estergruppe mit der Struktur von Formel (3a) oder (3b) ist 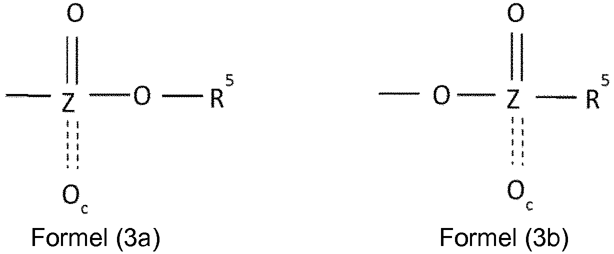
Y eine monovalente Alkylgruppe mit 1 bis 10 Kohlenstoffatomen, z.B. 1 bis 6 Kohlenstoffatomen, ist;
a gleich 1 oder 2 ist; b gleich 0, 1 oder 2 ist;
Z gleich C oder S ist und wenn Z gleich C ist, c gleich 0 ist, und wenn Z gleich S ist, c gleich 1 ist,
R⁵ eine monovalente Alkyl- oder Arylalkylgruppe mit 2 bis 25 Kohlenstoffatomen ist;
die gestrichelte Linie eine optionale Doppelbindung repräsentiert; und wobei Formel (2) keine N-Atome enthält,
in einer auf Polyharnstoff basierenden Beschichtungszusammensetzung zur Verbesserung der Regenerosionsbeständigkeit oder Feststoffpartikelerosionsbeständigkeit einer Beschichtung, gebildet aus der auf Harnstoff basierenden Beschichtungszusammensetzung, wobei die Verbesserung der Regenerosionsbeständigkeit nach ASTM G73-10 messbar ist und die Verbesserung der Feststoffpartikelerosionosbeständigkeit nach ASTM G76 messbar ist.

## Revendications

1. Composition de revêtement comprenant
(i) une résine filmogène comprenant
a) 60 à 90% en poids d'une ou de plusieurs polyamine(s) contenant des groupes amine secondaire préparés en faisant réagir une ou plusieurs polyamine(s) comprenant des groupes amine primaire avec un ester dialkylique insaturé ; et,
b) 10 à 40% en poids d'un ou de plusieurs ester(s) ayant la structure de la Formule (2) 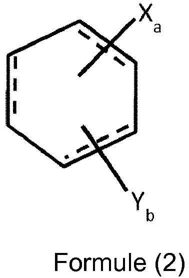 où X représente un groupe fonctionnel ester ayant la structure de la Formule (3a) ou (3b) 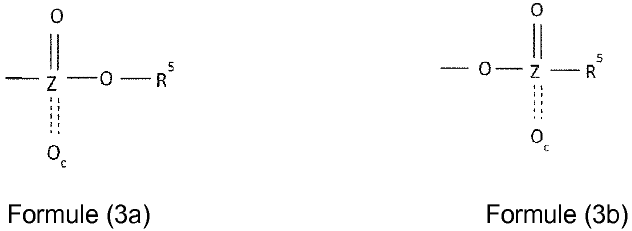
Y représente un groupe alkyle monovalent ayant 1 à 10 atome(s) de carbone, par exemple 1 à 6 atome(s) de carbone,
a vaut 1 ou 2 ; b vaut 0, 1 ou 2 ;
Z représente C ou S, et lorsque Z représente C, c vaut 0, et lorsque Z représente S, c vaut 1 ;
R⁵ représente un groupe alkyle ou arylalkyle monovalent ayant 2 à 25 atomes de carbone ;
la ligne en pointillé représente une double liaison facultative ; et
la formule (2) ne contient pas d'atomes N,
dans laquelle le pourcentage en poids est basé sur la somme du poids de (a) et de (b) dans la résine filmogène à l'exclusion du solvant, et
(ii) une résine de polyisocyanate utilisée pour durcir la résine filmogène (i), où la résine de polyisocyanate a un poids équivalent d'isocyanate compris entre 280 g/éq et 840 g/éq et un poids moléculaire moyen en nombre compris entre 550 et 2000 g/mol, où le poids équivalent d'isocyanate est mesuré au moyen de la mesure de la teneur en groupes isocyanate par titrage en utilisant la di-n-butylamine selon la norme ASTM D2572-87, et le poids moléculaire moyen en nombre est mesuré par chromatographie par perméation de gel, GPC, selon la norme ISO-13885-1:2008
où le composant (i) et le composant (ii) sont présents dans la composition de revêtement en une quantité telle que le rapport stoechiométrique de groupes isocyanate:groupes amine secondaire est compris entre 1,0:1,0 et 2,5:1,0.

2. Composition de revêtement selon la revendication 1, dans laquelle la/les polyamine(s) contenant des groupes amine secondaire sont une/des polyamine(s) cyclique(s) contenant des groupes amine secondaire préparés en faisant réagir une ou plusieurs polyamine(s) cyclique(s) comprenant des groupes amine primaire avec un ester dialkylique insaturé.

3. Composition de revêtement selon l'une des revendications précédentes, dans laquelle la/les polyamine(s) contenant des groupes amine secondaire est/sont une amine d'ester polyaspartique.

4. Composition de revêtement selon l'une quelconque des revendications précédentes, comprenant en outre des particules solides d'un polymère à base de résine amino, où facultativement le polymère à base de résine amino est un polymère à base de méthylurée.

5. Composition de revêtement selon la revendication 4, **caractérisée en ce que** le polymère à base de résine amino est un polymère réticulé.

6. Composition de revêtement selon la revendication 4 ou 5, **caractérisée en ce que** les particules solides d'un polymère à base de résine amino sont présentes en une quantité comprise entre 1 et 25% en poids, par rapport au poids de la composition de revêtement totale.

7. Composition de revêtement selon l'une quelconque des revendications précédentes, dans laquelle la résine de polyisocyanate a un poids équivalent d'isocyanate compris entre 280 g/éq et 500 g/éq.

8. Composition de revêtement selon l'une des revendications précédentes, dans laquelle la ou les plusieurs polyamine(s) comprenant des groupes amine secondaire a/ont un poids équivalent d'amine compris entre 150 g/éq et 450 g/éq.

9. Composition de revêtement de l'une des revendications précédentes, dans laquelle le composant (i) et le composant (ii) sont présents dans la composition de revêtement en une quantité telle que le rapport stoechiométrique de groupes isocyanate:groupes amine secondaire est supérieur à 1,5:1,0 et allant jusqu'à un rapport maximal de 2,5:1,0.

10. Composition de revêtement de l'une des revendications précédentes, dans laquelle la ou les plusieurs polyamine(s) contenant des groupes amine secondaire de la résine filmogène a/ont la structure de la Formule (1) : 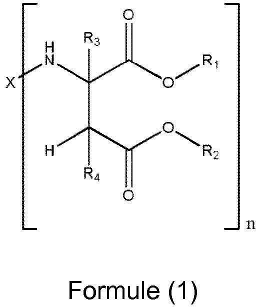
où X représente un hydrocarbure aliphatique linéaire ou cyclique ayant une valence supérieure ou égale à 2 qui est inerte vis-à-vis des groupes isocyanate à des températures allant jusqu'à 100°C ;
R₁ et R₂ sont chacun indépendamment choisis parmi des groupes organiques qui sont inertes vis-à-vis des groupes isocyanate à des températures allant jusqu'à 100°C ;
R₃ et R₄ sont chacun indépendamment choisis parmi l'hydrogène et des groupes organiques qui sont inertes vis-à-vis des groupes isocyanate à des températures allant jusqu'à 100°C ; et
n est un nombre entier supérieur ou égal à 2.

11. Composition de revêtement de l'une des revendications précédentes, fournie à deux composants, un premier composant comprenant la résine filmogène et un deuxième composant comprenant la résine de polyisocyanate.

12. Procédé de protection d'un substrat contre l'érosion par la pluie ou l'érosion par des particules solides
- en fournissant une composition de revêtement telle que définie dans l'une quelconque des revendications 1 à 11,
- en appliquant la composition de revêtement sur le substrat pour former une ou plusieurs couche(s) de revêtement sur le substrat, et
- en permettant à la/aux couche(s) de revêtement de durcir sur le substrat à température ambiante,
dans lequel la protection contre l'érosion par la pluie peut être mesurée selon la norme ASTM G73-10 et la protection contre l'érosion par des particules solides peut être mesurée selon la norme ASTM G76.

13. Procédé de la revendication 12, dans lequel le substrat est une pale d'éolienne ou une partie de celle-ci.

14. Substrat revêtu, par exemple une pale d'éolienne ou une partie de celle-ci, dans lequel la pale d'éolienne ou une partie de celle-ci est revêtue d'une ou de plusieurs couche(s) de composition de revêtement telle que définie dans l'une quelconque des revendications 1 à 11.

15. Utilisation d'un ou de plusieurs ester(s) ayant la structure de la Formule (2) 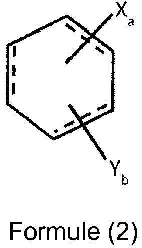 où X représente un groupe fonctionnel ester ayant la structure de la Formule (3a) ou (3b) 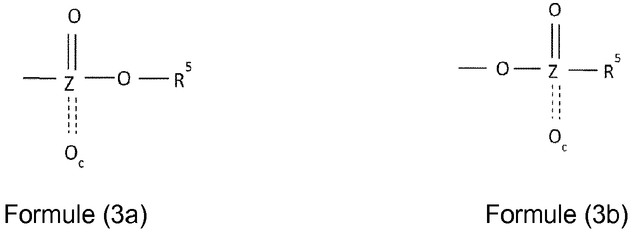
Y représente un groupe alkyle monovalent ayant 1 à 10 atome(s) de carbone, par exemple 1 à 6 atome(s) de carbone,
a vaut 1 ou 2 ; b vaut 0, 1 ou 2 ;
Z représente C ou S, et lorsque Z représente C, c vaut 0, et lorsque Z représente S, c vaut 1 ;
R⁵ représente un groupe alkyle ou arylalkyle monovalent ayant 2 à 25 atomes de carbone ;
la ligne en pointillé représente une double liaison facultative, et
dans laquelle la formule (2) ne contient pas d'atomes N,
dans une composition de revêtement à base de polyurée pour améliorer la résistance à l'érosion par la pluie ou la résistance à l'érosion par des particules solides d'un revêtement formé à partir de la composition de revêtement à base de polyurée, où l'amélioration de la résistance à l'érosion par la pluie peut être mesurée selon la norme ASTM G73-10 et l'amélioration de la résistance à l'érosion par des particules solides peut être mesurée selon la norme ASTM G76.
